Europäisches Patentamt

European Patent Office

Office européen des brevets

(11) Publication number: **0 114 520**
**A2**

# EUROPEAN PATENT APPLICATION

(21) Application number: 83307896.7

(22) Date of filing: 22.12.83

(51) Int. Cl.³: **H 04 K 1/06**

(30) Priority: 24.12.82 JP 232258/82

(43) Date of publication of application:
01.08.84 Bulletin 84/31

(84) Designated Contracting States:
AT CH DE FR GB LI NL

(71) Applicant: SONY CORPORATION
7-35 Kitashinagawa 6-Chome Shinagawa-ku
Tokyo 141(JP)

(72) Inventor: Komatsubara, Michimasa c/o Patent Division
Sony Corporation 7-35 Kitashinagawa-6
Shinagawa-ku Tokyo(JP)

(72) Inventor: Fukami, Takeshi c/o Patent Division
Sony Corporation 7-35 Kitashinagawa-6
Shinagawa-ku Tokyo(JP)

(72) Inventor: Sakamoto, Akira c/o Patent Division
Sony Corporation 7-35 Kitashinagawa-6
Shinagawa-ku Tokyo(JP)

(72) Inventor: Sugita, Takehiro c/o Patent Division
Sony Corporation 7-35 Kitashinagawa-6
Shinagawa-ku Tokyo(JP)

(72) Inventor: Miyata, Toshiya c/o Patent Division
Sony Corporation 7-35 Kitashinagawa-6
Shinagawa-ku Tokyo(JP)

(74) Representative: Thomas, Christopher Hugo et al,
D Young & Co 10 Staple Inn
London WC1V 7RD(GB)

(54) Marker signal detecting systems.

(57) A system for detecting a marker signal $(S_M)$ with a predetermined pattern inserted periodically in an information signal $(S_A)$ comprises a circuit (5) which repetitively generates window signals $(S_W)$ and successively shifts the window signals $(S_W)$ in a step-wise fashion during a predetermined interval, a detecting circuit (16) which employs the window signals $(S_W)$ to detect at least a portion of a marker signal $(S_M)$ in the information signal $(S_A)$ when at least the portion of the detected marker signal $(S_M)$ ocurs during one of the window signals $(S_W)$, a circuit (17) which determines when the detected marker signal $(S_M)$ has the predetermined pattern to generate a net marker signal $(S_M')$ in response thereto, and a circuit (32) responsive to the net marker signal $(S_M')$ which repetitively generates subsequent unshifted window signals $(S_W)$ beginning a predetermined time after the detected marker signal $(S_M)$.

./...

Croydon Printing Company Ltd.

FIG. 1

1

## MARKER SIGNAL DETECTING SYSTEMS

This invention relates to marker signal detecting systems. Such systems may be used to detect a marker signal periodically inserted in an information signal such as a scrambled audio signal.

In a scrambling system for an audio signal, an information signal is divided into a plurality of blocks, with each block then being formed of a plurality of segments. The segments of the audio signal are rearranged on a time-base in a predetermined order to form the scrambled audio signal. On reception, the segments are rearranged into the original order to reproduce or restore the original audio signal.

If the scrambled audio signal is subject to time-base fluctuations which can occur, for example, if the signal is first recorded by a video tape recorder and then played back, the original audio signal reproduced from the video tape recorder can be distorted. Alternatively, noise can be superimposed on the signal, since a connecting portion between respective segments is displaced due to the time-base fluctuations, thus causing significant deterioration in the quality of the audio signal.

In a proposed system, a marker signal has been superimposed upon the audio signal to indicate or mark the beginning of each segment in a block of the audio signal in order to deal with the errors which occur from time-base fluctuations. A notch filter or the like is used to extract the marker signal from the information signal. A phase-locked loop (PLL) circuit can be used to lock in on the extracted marker signal which repeats at periodic intervals. However, in such a system, the reproduced signal is theoretically worse than the original signal because the marker signal is inserted within a band or region of the audio signal so that a portion of the audio signal is obliterated. An additional drawback to this system is its expense, in that the notch filter used to extract the marker signal is expensive.

In order to deal with such problems, it has also been proposed to utilize as the marker signal a high or low frequency signal which is outside the band or region of the audio signal. When a high frequency signal is used as the marker signal, however, the signal transmission path is restricted. When a low frequency signal is utilized as the marker signal, detection is difficult and takes a long time.

According to the present invention there is provided a system for detecting a marker signal with a predetermined pattern inserted periodically in an information signal, the system comprising:

means for repetitively generating window signals and successively shifting said window signals in a step-wise fashion during a predetermined interval;

means employing said window signals for detecting at least a portion of a marker signal in said information signal when at least said portion of the detected marker signal occurs during one of said window signals;

means for determining when said detected marker signal has said predetermined pattern and generating a net marker signal in response thereto; and

means responsive to said net marker signal for repetitively generating subsequent unshifted window signals beginning a predetermined time after said detected marker signal.

The invention will now be described by way of example with reference to the accompanying drawings, throughout which like parts are referred to by like references, and in which:

Figure 1 is a block diagram illustrating an embodiment of marker signal detecting system according to the present invention;

Figures 2A· to 2L are waveform diagrams used in explaining the operation of the embodiment of Figure 1;

Figure 3 is a block diagram of a controller circuit included in the embodiment of Figure 1; and

Figures 4A to 4F and 5A to 5N are waveform diagrams used in explaining the operation of the circuit of Figure 3.

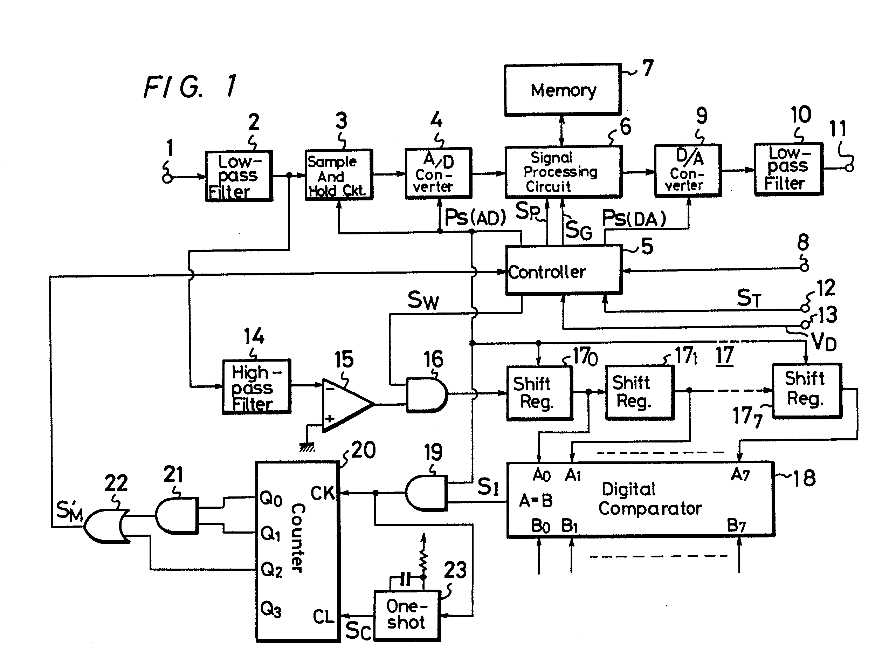

Referring initially to Figure 1, an embodiment of the present invention will be described in conjunction with an information signal such as a scrambled audio signal in which the transmission bandwidth is restricted, and the information signal with a marker signal included therein may have time-base fluctuations. Such time-base fluctuations can occur, for example, when the information signal is recorded with a video tape recorder and then played back. For the illustrated embodiment, the audio signal is divided into a plurality of blocks. Each block is formed of a plurality of segments, with the segments thereof arranged on a time-base in a predetermined order for each block. In the scrambling operation, the segments of each block are changed in order. In addition, the respective segments are compressed in time-base, and a redundant portion formed from interpolating data comprising the audio signal is inserted between the segments. The marker signal which is to be detected is then inserted in the redundant portion between two segments.

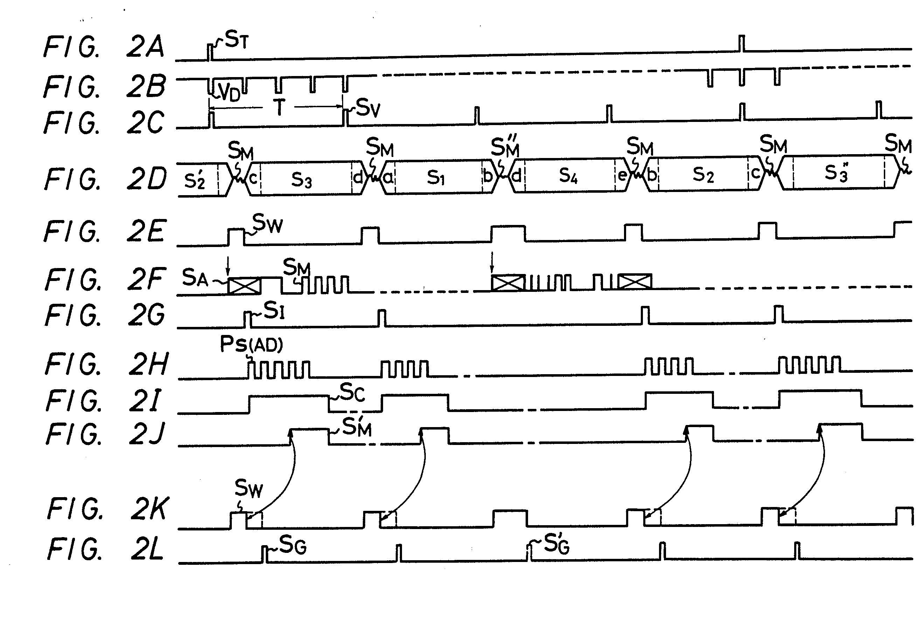

The scrambled audio signal (see Figure 2D) from an input terminal 1 is supplied through a low-pass filter 2 to a sample and hold circuit 3 where it is sampled, held, and then supplied to an analog to digital (A/D) converter 4 which converts an analog signal to a digital signal. A controller 5 supplies control signals $P_{S(AD)}$ to control the sample and hold circuit 3 and the A/D converter 4, as described more fully below.

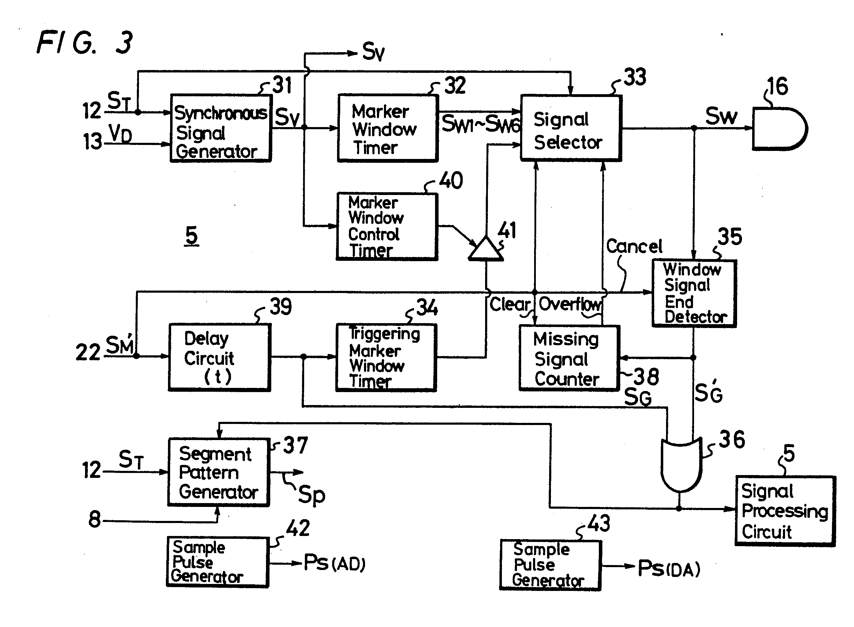

The digital signal from the A/D converter 4 is supplied to a signal processing circuit 6 and thence, to a random access memory (RAM) 7 into which the digital signal is written and from which the digital signal may be read. The controller 5 supplies at each segment a segment pattern information signal $S_P$ to the signal processing circuit 6 regarding the information required to rearrange the order of the scrambled audio signal. As described more fully below with reference to Figure 3, a key code from a terminal 8 is supplied to a segment pattern generator circuit 37 included in the controller 5 and which generates the segment pattern information signal $S_P$. The signal processing circuit 6, in response to the segment pattern information signal $S_P$, rearranges the data read out from the RAM 7 so that it corresponds to the normal or unscrambled audio signal.

The signal processing circuit 6 also performs a time-base expansion of the scrambled audio signal by changing the reading and writing rate of the RAM 7. Accordingly, the frequency $f_{AD}$ of the sampling pulse $P_{S(AD)}$ for A/D converter 4 and the frequency $f_{DA}$ of sampling pulses $P_{S(DA)}$ for a digital to analog (D/A) converter 9 have the following relationship:

$f_{AD}$ is greater than $f_{DA}$.

The controller 5 supplies the sampling pulses $P_{S(DA)}$ to control the D/A converter 9 whereby the digital data read from the RAM 7 is converted to analog data. The analog data is then supplied to a low-pass filter 10 and thence, to an output terminal 11 as a descrambled audio signal.

The detection of a marker signal inserted into the redundant portion

4    0114520

of a scrambled audio signal will now be described.

A start signal $S_T$ which indicates the beginning of each block of the audio signal (as illustrated in Figure 2A) is supplied to the controller 5 from a terminal 12. A vertical synchronizing signal $V_D$ of a video signal (as illustrated in Figure 2B) is supplied to the controller 5 from a terminal 13. It is to be appreciated that, in this embodiment, the scrambled audio signal accompanies a scrambled video signal, and that the two signals together comprise a scrambled television signal. The controller 5 generates a synchronous signal $S_V$ (see Figure 2C) in response to the start signal $S_T$ and the vertical synchronizing signal $V_D$, and has a period T equal to 4V (where the interval of one segment of the audio signal is selected to be four times the vertical sweep interval V of an associated video signal).

The controller 5 generates a window signal $S_W$, which functions as a marker signal detecting signal, a predetermined time after the generation of the synchronous signal $S_V$.

In the scrambled audio signal of Figure 2D supplied from the input terminal 1, the reference letters $S_3$, $S_1$, $S_4$ and $S_2$ identify the order in which the segments of the original audio signal have been rearranged in one block upon encoding. According to the encoding scheme of Figure 2D, each block of the original audio signal is divided into four segments. The third segment is transmitted first, the first segment is transmitted second, the fourth segment is transmitted third, and the second segment is transmitted last. In Figure 2D, segments $S_2'$ and $S_3''$ represent the second and third segments, respectively, of the preceding and following blocks.

Each segment $S_i$ (i equals 1 to 4) includes redundant portions inserted at the beginning and at the end which are formed by interpolating data of the audio signal, as indicated by the broken lines. In Figure 2D, the redundant portions are indicated by the reference letters a, b, c, d and e. The redundant portions designated by the same reference letter, for example, d, indicate data having the same content. Each marker signal $S_M$ is inserted substantially between the redundant portions of the segments $S_i$.

The low-pass filter 2 removes the low frequency band components of the scrambled audio signal from the input terminal 1, and the resulting signal is supplied to a high-pass filter 14. The output signal from the high-pass filter 14 is supplied to an inverting input terminal of a comparator 15. A non-inverting input terminal of the comparator 15 is connected to ground.

Accordingly a zero-cross-point of the input signal supplied to the comparator 15 is detected and the signal is waveform shaped so that the comparator 15 generates digital data at its output terminal.

The output digital data from the comparator 15 is supplied to one input terminal of a gate circuit such as an AND circuit 16. The window signal $S_W$ (see Figure 2E) from the controller 5 is supplied to another input terminal of the AND circuit 16. During the window signal $S_W$, the AND circuit 16 supplies a signal which, as shown on an enlarged scale in Figure 2F, includes an audio signal $S_A$ and a marker signal $S_M$.

The output signal from the AND circuit 16 is sequentially supplied in response to the sampling pulses $P_{S(AD)}$ from the controller 5 to a register circuit 17 comprising, in the illustrated embodiment, a plurality of shift registers $17_0$ to $17_7$. In one example, each shift register $17_i$ (i equals 0 to 7) is formed of a plurality of stages, for example, five. The output signals from the last stage of each shift register $17_i$ are supplied to a respective input terminal $A_0$ to $A_7$ of a digital comparator 18. A pattern information signal corresponding to the pattern of the marker signal $S_M$ inserted in the scrambled audio signal is supplied to input terminals $B_0$ to $B_7$ of the digital comparator 18. The digital comparator 18 generates a coincidence or identification output signal $S_I$ (as shown in Figure 2G) when the pattern setting values supplied to the input terminals $B_0$ to $B_7$ coincide with the contents of the shift registers $17_0$ to $17_7$ supplied to the input terminals $A_0$ to $A_7$.

Coincidence output signal $S_I$ opens the gate of an AND circuit 19 so that, during the period of the coincidence output signal $S_I$, the sampling pulse $P_{S(AD)}$ from the controller 5 (as shown on an enlarged scale in Figure 2H) is supplied to a clock terminal CK of a counter 20 for counting thereby. The counter 20 generates a count value as a net marker signal when the count value thereof reaches a predetermined value, for example, three or more. In the illustrated embodiment, the counter 20 can count up to seven for its output count value. Gate means, such as an AND circuit 21 and an OR circuit 22, are connected to output terminals of the counter 20. The AND circuit 21 has two input terminals thereof connected to the output terminals $Q_0$ and $Q_1$ of the counter 20, while one input terminal of the OR circuit 22 is connected to the output terminal of the AND circuit 21 and another input terminal of the OR circuit 22 is connected to an output

terminal $Q_2$ of the countr 20. Consequently, when the count value of the counter 20 reaches "3, that is, the logic levels at the output terminals $Q_0$, $Q_1$ and $Q_2$ are (1 1 0), respectively, the gates of the AND circuit 21 and the OR circuit 22 open so that the OR circuit 22 generates a net marker signal $S_M'$ (see Figure 2J) which is supplied to the controller 5. When the count value of the counter 20 ranges between four, corresponding to logic levels at output terminals $Q_0$, $Q_1$ and $Q_2$ of (0 0 1), and seven, corresponding to logic levels at the output terminals $Q_0$, $Q_1$ and $Q_2$ of (1 1 1), the gate circuits 21 and 22 generate the net marker signal $S_M'$ in a similar fashion. A monostable multivibrator or one-shot 23 triggered by the output of the AND gate 19 generates an output signal $S_C$ which is supplied to the counter 20 and determines the length or end of the net marker signal $S_M'$. As illustrated on an enlarged scale in Figure 2I, the output signal $S_C$ rises in synchronism with the first input pulse to the counter 20 and falls after a predetermined time.

The controller 5 closes the window signal $S_W$ in response to the net marker signal $S_M'$. As shown in Figures 2J and 2K, in the illustrated embodiment, the controller 5 closes the window signal $S_W$ in synchronism with the leading edge of the net marker signal $S_M'$. The controller 5 generates a segment switching signal $S_G$ (Figure 2L) a predetermined time thereafter, and the segment switching signal $S_G$ is supplied to the signal processing circuit 6. The signal processing circuit 6 carries out signal processing operations upon the scrambled audio signal, such as rearrangement of the signal into its original order, by switching or rearranging each segment of the audio signal on the basis of the segment switching signal $S_G$.

In transmitting the scrambled audio signal, a portion of the marker signal $S_M$ can drop out, for example, as indicated near the centre of Figure 2D by the reference $S_M''$. The marker signal $S_M$ can be absent, for example, due to a drop-out or the like in the transmission path. When a portion of the marker signal $S_M$ drops out, the AND circuit 16 does not generate a signal which contains the normal marker signal pattern, as illustrated in Figure 2F. Accordingly, the digital comparator 18 does not supply the coincidence output signal $S_I$, as illustrated in Figure 2G. The AND circuit 19 is not open, and hence, the sampling pulse $P_{S(AD)}$ from the controller 5 is not supplied to the counter 20, as shown in Figure 2H, so that the OR circuit 22 does not generate the net marker signal $S_M'$, as shown in Figure 2J. Thus, the controller 5 cannot generate a segment switching signal $S_G$ in response to a detected marker signal $S_M$. When a marker signal $S_M$ drops out, the embodiment generates a pseudo or dummy segment switching signal $S_G'$, as shown by the broken line in Figure 2L, in response to a preceding net marker signal $S_M'$ (see Figure 2J).

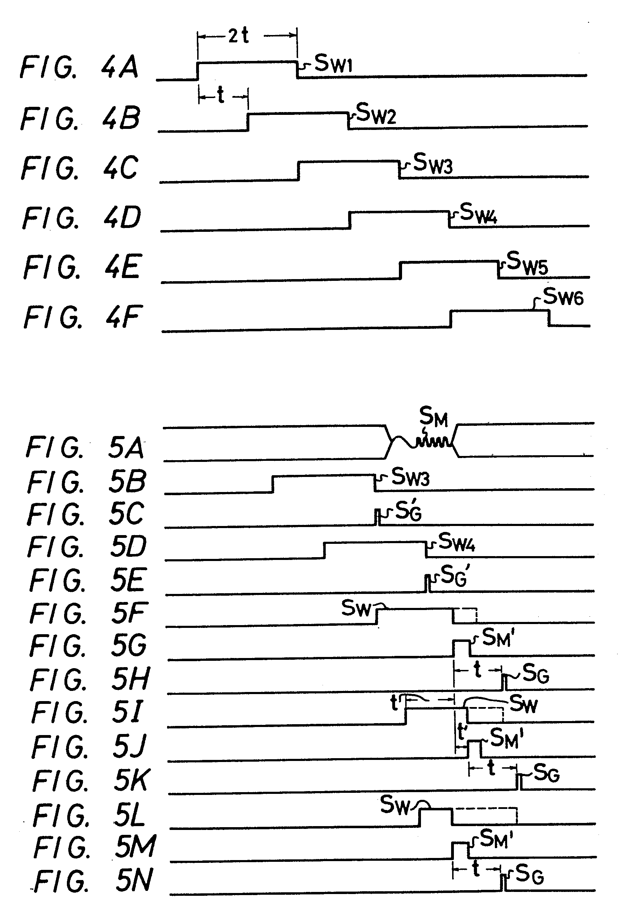

Referring now to Figure 3, it will be seen that the circuit of the controller 5 included in the marker signal detecting system of Figure 1, may comprise a synchronous signal generator 31 which receives a start signal $S_T$ and the vertical synchronizing signal $V_D$ and generates the synchronous signal $S_V$ (see Figure 2C) which, as described before, has a period of 4V and is synchronized with the start signal $S_T$ and the vertical synchronizing signal $V_D$. A marker window timer 32 receives the synchronous signal $S_V$ and repetitively generates self-running marker window signals $S_{W1}$ to $S_{W6}$ in response thereto until a marker signal $S_M$ is detected to occur during one of the window signals $S_{Wi}$ (i equals 1 to 6). Each self-running marker window signal $S_{Wi}$ has a duration time 2t, as illustrated in Figures 4A to 4F. It is to be appreciated that the self-running marker signals $S_{Wi}$ do not have to be in six steps, as illustrated in Figures 4A to 4F, but rather, can be any desired number of steps.

In the embodiment, the third self-running window signal $S_{W3}$ is selected as the initial state. The self-running window signals $S_{Wi}$ are time-shifted in a repetitive or step-wise fashion beginning with the window signal $S_{W3}$, that is, the window signals $S_{Wi}$ are repetitively selected in the following sequence:

$$S_{W3} : S_{W4} : S_{W5} : S_{W6} : S_{W1} : S_{W2} : S_{W3}$$

A signal selector 33 receives the self-running window signals $S_{Wi}$ and repetitively supplies one of the self-running window signals $S_{Wi}$ to the AND circuit 16 (Figure 1) after the occurrence of a net marker signal $S_M'$ during a self-running window signal $S_{Wi}$. The signal selector 33 selects one by one the self-running window signals $S_{Wi}$ in response to the start signal $S_T$. As described more fully below, when the net marker signal $S_M'$ is detected, the signal selector 33 changes over from an initial mode to a triggered mode for passing therethrough a triggering marker window signal $S_W$ from a triggering marker window timer 34 which is controlled in response to the net marker signal $S_M'$.

The end of each window signal $S_{Wi}$ supplied from the signal selector 33 to the AND circuit 16 is detected by a window signal end detector 35. For example, in the initial mode of the signal selector 33, when the self-running window signal $S_{W3}$ (see Figure 5B) is supplied from the marker window timer 32 through the signal selector 33 as the window signal $S_W$, the window signal end detector 35 detects the end of the self-running window signal $S_{W3}$. As is clear from a comparison of Figures 5A and 5B, in the illustrated example, the marker signal $S_M$ is outside the window of the self-running window signal $S_{W3}$ and hence is not detected. Accordingly, the window signal end detector 35 generates a dummy segment switching signal $S_G'$ which rises at the end of the self-running window signal $S_{W3}$, as shown in Figure 5C, and which is supplied through an OR gate 36 to the signal processing circuit 6 (see Figure 1) and a segment pattern generator 37.

The above-described operation is performed several times, for example, four times for the same window signal. The window signal end detector 35 generates the dummy segment switching signal $S_G'$ in response to each self-running window signal $S_{W3}$ supplied thereto. A missing or undetected signal counter 38 counts the number of dummy segment switching signals $S_G'$ which the window signal end detector 35 generates. . When the count in the missing signal counter 38 reaches a predetermined value, for example four, the missing signal counter 38 overflows and supplies an overflow signal to the signal selector 33. The signal selector 33 is changed to supply the next sequential self-running window signal $S_{W4}$, as shown in Figure 5D, in response to the overflow signal from the missing signal counter 38. It is to be appreciated that the signal selector 33 repeatedly supplies the self-running window signal $S_{W3}$, that is, the initial signal, until it receives the overflow signal from the missing signal counter 38.

The above-described operation is also repeated a plurality of times, for example, four times, with the self-running window signal $S_{W4}$ until the missing signal counter 38 overflows or the net marker signal $S_M'$ is detected. It is to be understood that a dummy segment switching signal $S_G'$, as shown in Figure 5E, is produced in response to each window signal $S_{Wi}$ which is supplied to the OR gate 36 and is counted by the missing signal counter 38.

When at least a part of the marker signal $S_M$ (Figure 5A) coincides with a window signal $S_{Wi}$, for example, the window signal $S_{W5}$, the corresponding net marker signal $S_M'$ changes the signal selector 33 to its triggered mode where it supplies triggering marker window signals. In addition, the net marker signal $S_M'$ clears the missing signal counter 38 and inhibits the window signal end detector 35 from generating the dummy segment switching signal $S_G'$. The net marker signal $S_M'$ is supplied to a delay circuit 39 which delays same by a predetermined amount t after which it is then supplied to the triggering marker window timer 34 as a start signal. The triggering marker window timer 34 then generates a triggering marker window signal $S_W$ in response thereto, as shown in Figure 5F, which is supplied through the signal selector 33 to the AND gate 16 and the window signal end detector 35. As is clear from Figure 5F, the triggering marker window signal $S_W$ supplied to the window signal end detector 35 falls in synchronism with, for example, the leading edge of the net marker signal $S_M'$ (see Figure 5G) when the net marker signal $S_M'$ is supplied to the window signal end detector 35 as a cancel signal. That is, the triggering marker window signal $S_W$ is closed in response to the leading edge of the net marker signal $S_M'$. It is also to be noted that the signal from the delay circuit 39 is supplied as a net segment switching signal $S_G'$, as shown in Figure 5H, to the OR circuit 36, and thence, to the signal processing circuit 6 (see Figure 1) and the segment pattern generator 37.

Referring to Figures 5I and 5L, once the marker signal $S_M$ is detected, the triggering marker window timer 34 generates triggering marker window signals $S_W$ at every (T-t) time. As shown in Figures 5J and 6M, the net marker signals $S_M'$ close the windows of such triggering marker window signals $S_W$. In other words, the net marker window signals $S_M'$ substantially control the window opening time of the triggering marker window signal $S_W$ generated after the marker signal $S_M$ is detected.

Referring to Figure 5J, the time interval t' represents an amount of displacement corresponding to time-base fluctuations which occur in the transmitting system. As shown in Figures 5K and 5N, the net segment switching signals $S_G$ are supplied to the OR circuit 36 in the time t after net marker signals $S_M'$ (shown in Figures 5J and 5M) are generated.

The synchronous signal $S_V$ from the synchronous signal generator 31 is supplied to a marker window control timer 40 which generates a gate control signal to be supplied to a gate circuit 41. The gate circuit 41 controls the timing of the triggering marker signal $S_W$ so that the detected marker signal $S_M$ will exist in the period T of the synchronous signal $S_V$ without fail.

The circuit of Figure 3 is further shown to include a sample pulse generator 42 which generates the sample pulses $P_{S(AD)}$ and a sample pulse generator 43 which generates the sample pulses $P_{S(DA)}$.

The above-described embodiment detects a marker signal which is inserted as a reference signal for switching segments of a scrambled audio system. The invention, however, is not limited to such an application, but can be applied to other information signals which require the detection of a marker signal. For example, the invention can be applied to detect a control signal or the like which is periodically inserted into any suitable transmitted information signal.

As described above, a system is provided which generates a window signal to detect a part of an audio signal containing at least a periodically inserted marker signal. The window signal is moved or time-shifted automatically in a step-wise fashion until the occurrence of a marker signal during one of the window signals is detected. When the marker signal is detected once, the window signal can be set so that the marker signal will continue to occur within the window signal by relying upon the periodicity of the marker signal. As a result, each subsequent marker signal can be accurately detected on the basis of the first detected marker signal. Signal processing, such as rearranging a scrambled audio signal, can be accurately performed with the derived signals. Moreover, even when a marker signal cannot be detected due to an error or drop-out in the transmission path, a dummy signal is generated to compensate for the missing signal by using a preceding marker signal as a reference.

## CLAIMS

1.     A system for detecting a marker signal ($S_M$) with a predetermined pattern inserted periodically in an information signal ($S_A$), the system comprising:

means (5) for repetitively generating window signals ($S_W$) and successively shifting said window signals ($S_W$) in a step-wise fashion during a predetermined interval;

means (16) employing said window signals ($S_W$) for detecting at least a portion of a marker signal ($S_M$) in said information signal ($S_A$) when at least said portion of the detected marker signal ($S_M$) occurs during one of said window signals ($S_W$);

means (17) for determining when said detected marker signal ($S_M$) has said predetermined pattern and generating a net marker signal ($S_M'$) in response thereto; and

means (32) responsive to said net marker signal ($S_M'$) for repetitively generating subsequent unshifted window signals ($S_W$) beginning a predetermined time after said detected marker signal ($S_M$).

2.     A system according to claim 1 further comprising means (35) for generating a dummy signal ($S_G'$) in response to drop-out of a marker signal ($S_M$) after a marker signal ($S_M$) has been detected.

3.     A system according to claim 2 wherein said means (35) for generating said dummy signal ($S_G'$) generates said dummy signal ($S_G'$) in response to the end of each of said window signals ($S_W$).

4.     A system according to claim 1 wherein said means (32) for repetitively generating subsequent unshifted window signals ($S_W$) includes:

marker window timer means (32) for generating a plurality of repeating window signals ($S_W$) in said step-wise fashion so that each of said repeating window signals ($S_W$) is delayed a predetermined amount from the next preceding repeating window signal ($S_W$);

a window signal end detector means (35) for generating a dummy signal ($S_G'$) in response to the end of said window signal ($S_W$);

means (38) for counting said dummy signals ($S_G'$) and producing an overflow signal when the count thereof exceeds a preset value; and

selecting means (33) for supplying a selected one of said repeating window signals ($S_W$) as said window signal ($S_W$) in response to said overflow signal.

5.     A system according to claim 4 wherein said means (17) for determining includes:

shift means (17) for shifting said marker signal ($S_M$) to produce a shifted marker signal ($S_M$);

comparator means (18) for comparing said shifted marker signal ($S_M$) with a signal having said predetermined pattern to produce a coincidence signal ($S_I$) when said signals correspond; and

means (22) for generating said net marker signal ($S_M'$) in response to said window signal ($S_W$) and said coincidence signal ($S_I$).

6.     A system according to claim 5 wherein said means (22) for generating said net marker signal ($S_M'$) includes:

first gate means (19) for supplying an output signal in response to both said window signal ($S_W$) and said coincidence signal ($S_I$);

counter means (20) for counting said output signals from said first gate means (19) to produce count signals in response thereto; and

second gate means (21, 22) for supplying said net marker signal ($S_M'$) in response to said count signals from said counter means (20).

7.     A system according to claim 6 wherein said second gate means (21, 22) supplies said net marker signal ($S_M'$) when the count of said counter means (20) exceeds a preset value.

8.     A system according to claim 6 wherein said means for detecting includes:

a high-pass filter (14) for filtering said information signal to produce a filtered information signal;

waveform shaping means (15) for shaping said filtered information signal to produce said marker signal ($S_M$) as a digital signal; and

selector means (16) for supplying said marker signal ($S_M$) from said waveform shaping means (15) to said shift means (17) in response to said window signal ($S_W$).

9. A system according to claim 4 further comprising:
delay means (39) for delaying said net marker signal ($S_M'$) by a preset amount to produce a delayed net marker signal ($S_M'$); and
means (36) for supplying one of said delayed net marker signals ($S_M'$) and said dummy signal ($S_G'$) as an identifying signal.

10. A system according to claim 9 wherein said means (32) for repetitively generating subsequent unshifted window signals ($S_W$) includes:
trigger marker window timing means (34) for generating a triggering marker window signal ($S_W$) in response to said delayed net marker signal ($S_M'$);
marker window control timing means (40) for generating gating signals in response to an external synchronous signal ($S_V$); and
gate means (41) for supplying said triggering marker window signal ($S_W$) to said selecting means (33) in response to said gating signals.

11. A system according to any one of the preceding claims wherein said information signal is a scrambled audio signal ($S_A$).

12. A system according to claim 11 further comprising means (5) for generating a descrambling signal in response to said identifying signal.

13. A system according to claim 12 further comprising signal processing means (6, 7) for descrambling said scrambled audio signal ($S_A$) in response to said descrambling signal.

FIG. 1

0114520

FIG. 2A
FIG. 2B
FIG. 2C
FIG. 2D
FIG. 2E
FIG. 2F
FIG. 2G
FIG. 2H
FIG. 2I
FIG. 2J
FIG. 2K
FIG. 2L

FIG. 3

0114520

FIG. 4A $S_{W1}$

FIG. 4B $S_{W2}$

FIG. 4C $S_{W3}$

FIG. 4D $S_{W4}$

FIG. 4E $S_{W5}$

FIG. 4F $S_{W6}$

FIG. 5A $S_M$

FIG. 5B $S_{W3}$

FIG. 5C $S_G'$

FIG. 5D $S_{W4}$

FIG. 5E $S_G'$

FIG. 5F $S_W$

FIG. 5G $S_M'$

FIG. 5H $S_G$

FIG. 5I $S_W$

FIG. 5J $S_M'$

FIG. 5K $S_G$

FIG. 5L $S_W$

FIG. 5M $S_M'$

FIG. 5N $S_G$